# EUROPÄISCHE PATENTSCHRIFT

(11) **EP 3 373 123 B1**
(45) Veröffentlichungstag und Bekanntmachung des Hinweises auf die Patenterteilung: **07.04.2021**
(21) Anmeldenummer: 18156986.4
(22) Anmeldetag: 15.02.2018
(51) Int. Cl.: G06F 3/0488, H04M 1/725, B60K 35/00

(54) **VERFAHREN UND VORRICHTUNG ZUR DARSTELLUNG VON EMPFOHLENEN BEDIENHANDLUNGEN EINES VORSCHLAGSSYSTEMS UND INTERAKTION MIT DEM VORSCHLAGSSYSTEM**
METHOD AND DEVICE FOR REPRESENTING A LIST OF SUGGESTED A CONTROL ACTIONS FROM A PROPOSAL SYSTEM AND INTERACTION WITH THE PROPOSAL SYSTEM
PROCÉDÉ ET DISPOSITIF DE PRÉSENTATION DES ACTIONS DE COMMANDE RECOMMANDÉES D'UN SYSTÈME D'APPEL DE PROPOSITIONS ET INTERACTION AVEC LE SYSTÈME D'APPEL DE PROPOSITIONS

(30) Priorität: 06.03.2017 DE 102017203570
(43) Veröffentlichungstag der Anmeldung: 12.09.2018
(73) Patentinhaber: VOLKSWAGEN AKTIENGESELLSCHAFT, 38440 Wolfsburg (DE)
(72) Erfinder: Palzer, Daniel, 10967 Berlin (DE); Schäfer, Helge, 31275 Lehrte (DE)

(56) Entgegenhaltungen:
- US-A1- 2013 014 040
- US-A1- 2016 360 382

## Beschreibung

Die vorliegende Erfindung betrifft ein Verfahren zur Darstellung von empfohlenen Bedienhandlungen eines Vorschlagssystems und Interaktion mit dem Vorschlagssystem, das insbesondere bei einer grafischen Benutzerschnittstelle in einem Fahrzeug eingesetzt werden kann. Die vorliegende Erfindung betrifft weiterhin eine Vorrichtung zur Durchführung des Verfahrens und ein Fahrzeug, das eingerichtet ist, ein solches Verfahren auszuführen oder eine solche Vorrichtung aufweist.

In vielen Bereichen der Technik werden für eine Interaktion mit Maschinen und Geräten Benutzerschnittstellen (abgekürzt HMI von englisch "Human Machine Interface") eingesetzten, wobei grafische Benutzeroberflächen bzw. Benutzerschnittstellen (abgekürzt GUI von englisch "Graphical User Interface") mittlerweile weit verbreitet sind. Mit grafischen Benutzerschnittstellen lassen sich grafische Elemente und komplexe Bedienabläufe auf einer Bildschirmoberfläche darstellen. Eine Bedienung kann durch eine Vielzahl verschiedener Eingabegeräte erfolgen, beispielsweise durch Berührung einer berührungsempfindlichen Displayoberfläche, einem sogenannten Touchscreen.

Für die Interaktion werden auf GUIs häufig Bedienelemente in Form von Bildsymbolen, sogenannten Icons, dargestellt. Eines dieser Bedienelemente kann durch den Nutzer an- bzw. ausgewählt werden und steht dann für die nächste Eingabe im Fokus. Dieses kann für den Nutzer sichtbar gemacht werden, in dem das an- bzw. ausgewählte Bedienelement grafisch hervorgehoben wird, was insbesondere von Vorteil ist wenn mehrere an- bzw. auswählbare Bedienelemente angezeigt werden. Größere Bildsymbole mit höherem Detailgrad werden häufig auch als Kacheln bezeichnet, wobei diese üblicherweise rechteckig ausgestaltet sind und auf einer Arbeitsoberfläche oder einem sogenannten Home Screen mehrere Kacheln auf einer Kacheloberfläche angeordnet werden können. Icons und Kacheln sind üblicherweise mit Softwareapplikationen bzw. Softwareanwendungen, kurz auch Applikationen oder "Apps", verknüpft, die durch Anwählen eines Icons bzw. einer Kachel gestartet und bedient werden können.

Bei einem GUI mit umfangreichem Funktionsumfang bzw. einer Vielzahl von Funktionalitäten kann eine Vielzahl von Bedienelementen erforderlich sein, was dazu führen kann, dass nicht alle Bedienelemente gleichzeitig in sinnvoller Weise angezeigt werden können oder die Übersichtlichkeit und Bedienbarkeit des GUIs leidet.

Dieses ist beispielsweise bei einer Verwendung von GUIs im Automobilbereich aufgrund der zunehmenden Funktionalität und Einstellmöglichkeiten im Infotainment-, Kommunikations-, Sicherheits- und Komfortbereich der Fall. Insbesondere bei einer Darstellung von Informationen bzw. einer Bedienung die sich an den Fahrer eines Fahrzeugs während der Fahrt richtet, sollte diese so einfach und intuitiv wie möglich sein um eine Ablenkung von der Fahraufgabe zu minimieren und so die Fahrsicherheit zu gewährleisten.

Um die Übersichtlichkeit zu verbessern ist es bekannt hierarchische Menüs mit einer Vielzahl von Unterebenen vorzusehen. Dieses kann aber für den Nutzer, beispielsweise für den Fahrer eines Fahrzeugs, die Navigation in dem Menü und das Auffinden von seltener benutzten Funktionen schwierig gestalten. Kontextabhängige Menüs können hier bedingt Abhilfe schaffen, erfordern aber eine Selektion der vom Nutzer gewünschten Anzeige bzw. Bedienung. Schließlich ist auch ein An- und Abschalten von Funktionen, beispielsweise in einem Konfigurationsmenü, für den Nutzer nicht unbedingt einfach und erfordert ein manuelles Eingreifen.

Der Bedienkomfort kann erhöht werden, indem das Nutzerverhalten und die Nutzungssituation erfasst werden um basierend hierauf die Bedienung je nach Situation anzupassen bzw. zu automatisieren oder dem Nutzer Empfehlungen für die Bedienung zu unterbreiten. Bei dem Fahrer eines Fahrzeugs kann dieses außerdem die Ablenkung bzw. Störung verringern.

Ein Verfahren und eine Vorrichtung zum Geben von Empfehlungen für mehrere Fahrzeuginsassen wird in der DE 10 2013 223 684 A1 offenbart. Hierbei werden die Insassen des Fahrzeugs identifiziert und eine Präferenzeninformation für die identifizierten Insassen abgerufen. Die Präferenzeninformation basiert hierbei auf einer vorherigen Beobachtung der Insassen und ermöglicht Empfehlungen zu geben, die beispielsweise angezeigt oder akustisch dargeboten werden, um daraufhin von den Insassen akzeptiert oder abgelehnt zu werden. Es kann auch vorgesehen sein, dass als Empfehlung eine Auswahl verschiedener Optionen angeboten wird, unter denen die Insassen eine Option anwählen, oder alle Optionen ablehnen können.

Weiterhin wird in der US 2016/0068169 A1 ein System und ein Verfahren zum Vorschlagen und Automatisieren von Aktionen in einem Fahrzeug beschrieben, wobei Empfehlungen gegeben werden wenn ein verbesserbares Verhalten vorliegt. Ähnlich offenbart die US 2015/0160019 A1 ein fahrzeuginternes Computersystem, das automatisch Aktionen ausführt um sicherzustellen dass die kognitive Belastung für den Fahrer nicht zu hoch wird. So kann beispielsweise ein eingehender Telefonanruf automatisch abgewiesen werden und dem Fahrer eine Information hierüber angezeigt werden.

Die US 2013/014040 A1 beschreibt ein Verfahren, bei dem kontextsensitive Empfehlungstechniken verwendet werden, die sowohl einen aktuellen Gerätekontext als auch einen sozialen Kontext bewerten, um Relevanzbewertungen für auf ein mobiles Gerät heruntergeladene Anwendungen zu generieren. Darstellungen der Anwendungen werden auf einer grafischen Benutzeroberfläche des mobilen Geräts entsprechend ihrer jeweiligen Relevanz neu angeordnet, in der Größe geändert und / oder auf andere Weise beeinflusst.

Die US 2016/360382 A1 offenbart ein Verfahren zur proaktiven Identifizierung und Darstellung von relevantem Inhalt auf einem berührungsempfindlichen Display eines mobilen Nutzerendgerätes. Auf einer grafische Benutzeroberfläche kann hierbei ein UI-Objekt angezeigt werden, dass eine vorgeschlagene Aktion und optional eine Erläuterung für diesen Vorschlag sowie ein Icon umfassen kann. Beispielsweise kann in Reaktion auf das Erkennen einer Wischgeste eines Nutzers über das UI-Objekt ein Symbol für eine Musikwiedergabeanwendung angezeigt werden und ein bestimmtes Lied auf einer Wiedergabeliste abgespielt werden. Ferner kann eine Schlummerschaltfläche vorgesehen sein, die, wenn sie ausgewählt ist, bewirkt, dass das Gerät die Anzeige des UI-Objekts beendet und das UI-Objekt nach einer durch die ausgewählte oder vorkonfigurierten Zeitdauer erneut anzeigt.

Es ist eine Aufgabe der Erfindung, ein Verfahren und eine Vorrichtung zur Darstellung von empfohlenen Bedienhandlung eines Vorschlagssystems und Interaktion mit dem Vorschlagssystem zur Verfügung zu stellen, dass einem Nutzer die generierten Vorschläge strukturiert und übersichtlich präsentiert und insbesondere in einem Fahrzeug eingesetzt werden kann.

Diese Aufgabe wird durch ein Verfahren mit den Merkmalen des Anspruchs 1, sowie durch eine entsprechende Vorrichtung gemäß Anspruch 7 gelöst. Bevorzugte Ausgestaltungen der Erfindung sind Gegenstand der abhängigen Ansprüche.

Das erfindungsgemäße Verfahren zur Darstellung von empfohlenen Bedienhandlung eines Vorschlagssystems und Interaktion mit dem Vorschlagssystem umfasst die folgenden Schritte:
- Generieren von Empfehlungen für zwei oder mehrere Softwareapplikationen;
- Gemeinsames Anzeigen jeweils eines Anzeige- und Bedienelements für die Empfehlungen der zwei oder mehreren Softwareapplikationen;
- Erfassen einer Betätigung eines der gemeinsam angezeigten Anzeige- und Bedienelemente;
- Öffnen der Softwareapplikation, welche dem betätigten Anzeige- und Bedienelement zugeordnet ist;
- Gemeinsames anzeigen mehrerer Anzeige- und Bedienelemente, welche jeweils eine von mehreren empfohlenen Bedienhandlungen für die geöffnete Softwareapplikation repräsentieren.

Gemäß der Erfindung erfolgt die gemeinsame Anzeige der Anzeige- und Bedienelemente für die zwei oder mehreren Softwareapplikationen auf einer globalen Anzeigenebene und die gemeinsame Anzeige der Anzeige- und Bedienelemente für die mehreren empfohlenen Bedienhandlungen für die geöffnete Softwareapplikation auf einer der globalen Anzeigeebene untergeordneten Applikationsanzeigeebene. Durch die Unterscheidung des Anzeigeortes auf globaler Ebene einerseits und Applikationsanzeigeebene andererseits können einem Nutzer eine Vielzahl von Vorschlägen präsentiert werden, wobei die Übersichtlichkeit des Vorschlagssystems gewährleistet ist.

Gemäß der beanspruchten Erfindung stellt ein Anzeige- und Bedienelement für eine Empfehlung einer Softwareapplikation neben einer Empfehlung zum Öffnen der Softwareapplikation auch eine empfohlene Bedienhandlung für diese Softwareapplikation dar.

Weiterhin werden vorteilhafterweise Empfehlungen für Bedienhandlungen der zwei oder mehreren Softwareapplikationen generiert, Wahrscheinlichkeitswerte für die Ausführung der empfohlenen Bedienhandlungen ermittelt und jeweils ein Anzeige- und Bedienelement, welches die empfohlene Bedienhandlung mit dem gegenwärtig höchsten Wahrscheinlichkeitswert für die jeweilige Softwareapplikation repräsentiert, für die zwei oder mehreren Softwareapplikationen auf der globalen Anzeigeebene angezeigt.

Hierbei werden die für die geöffnete Softwareapplikation angezeigten Anzeige- und Bedienelemente vorzugsweise geordnet nach den Wahrscheinlichkeitswerten für die Ausführung der empfohlenen Bedienhandlungen auf der Applikationsanzeigeebene angezeigt.

Vorteilhafterweise wird der Wahrscheinlichkeitswert für die Ausführung der empfohlenen Bedienhandlung aus dem bisherigen Nutzerverhalten und/oder äußeren Parametern ermittelt, wobei die äußeren Parameter zur Ermittlung des Wahrscheinlichkeitswerts die aktuelle Zeit und/oder die aktuelle Position des Nutzers umfassen können.

Gemäß der beanspruchten Ausführungsform des erfindungsgemäßen Verfahrens wird bei Erfassen einer Betätigung eines Anzeige- und Bedienelementes auf der globalen Anzeigenebene bei einer ersten Bedienhandlung die empfohlene Softwareapplikation geöffnet und die empfohlene Bedienhandlung für diese Softwareapplikation automatisch ausgeführt, bei einer von der ersten Bedienhandlung verschiedenen zweiten Bedienhandlung die empfohlene Softwareapplikation abgelehnt und anstelle der abgelehnten Empfehlung eine andere Empfehlung dargestellt, und bei einer von den ersten beiden Bedienhandlungen verschiedenen dritten Bedienhandlung die empfohlene Softwareapplikation geöffnet und für diese Softwareapplikation eine Empfehlung für eine oder mehrere Bedienhandlungen dargestellt.

Hierbei ist es von Vorteil, wenn die Anzeige- und Bedienelemente auf einem berührungsempfindlichen Display dargestellt werden und die erste Bedienhandlung einem Antippen eines dargestellten Anzeige- und Bedienelements, die zweite Bedienhandlung einer Streichbewegung nach oben und die dritte Bedienhandlung einer Streichbewegung nach unten auf einem der dargestellten Anzeige- und Bedienelemente entspricht.

Entsprechend umfasst eine erfindungsgemäße Vorrichtung zur Darstellung von empfohlenen Bedienhandlung eines Vorschlagssystems und Interaktion mit dem Vorschlagssystem eine Empfehlungseinheit, eine Bilderzeugungseinheit, ein Display, eine Computereinheit und eine Erfassungseinheit, wobei
- die Empfehlungseinheit Empfehlungen für zwei oder mehrere Softwareapplikationen generiert;
- die Bilderzeugungseinheit das Display so ansteuert, dass jeweils ein Anzeige- und Bedienelement für die Empfehlungen der zwei oder mehreren Softwareapplikationen gemeinsam anzeigt wird;
- die Erfassungseinheit eine Betätigung eines der angezeigten Anzeige- und Bedienelemente erfasst;
- auf der Computereinheit die Softwareapplikation, welche dem betätigten Anzeige- und Bedienelement zugeordnet ist, geöffnet wird; und
- die Bilderzeugungseinheit das Display daraufhin so ansteuert, dass mehrere Anzeige- und Bedienelemente, welche jeweils eine von mehreren empfohlenen Bedienhandlungen für die geöffnete Softwareapplikation repräsentieren, gemeinsam anzeigt werden.

Besonders vorteilhaft kann die erfindungsgemäße Vorrichtung in einem Fahrzeug vorgesehen sein, wobei das Vorschlagssystem Bedienhandlungen für ein Infotainmentsystem des Fahrzeugs empfiehlt.

Weitere Merkmale der vorliegenden Erfindung werden aus der nachfolgenden Beschreibung und den Ansprüchen in Verbindung mit den Figuren ersichtlich.
- Fig. 1: zeigt ein Flussdiagramm für das erfindungsgemäße Verfahren zur Darstellung von empfohlenen Bedienhandlungen eines Vorschlagssystems und Interaktion mit dem Vorschlagssystem;
- Fig. 2: zeigt ein Flussdiagramm für eine Ausführungsform des Verfahrens in Verbindung mit einem berührungsempfindlichen Display;
- Fig. 3: zeigt eine grafische Benutzerschnittstelle für ein Vorschlagssystem in einem Fahrzeug, bei der mehrere Empfehlungen auf globaler Anzeigeebene dargestellt werden (A) und eine der Empfehlungen ausgeführt wird (B);
- Fig. 4: zeigt die grafische Benutzerschnittstelle, wobei eine Empfehlung abgelehnt wird (A) oder eine Applikation der Empfehlung geöffnet wird (B);
- Fig. 5: zeigt die grafische Benutzerschnittstelle, wobei für eine geöffnete Applikation mehrere Empfehlungen angezeigt werden; und
- Fig. 6: zeigt schematisch ein Blockschaltbild einer erfindungsgemäßen Vorrichtung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

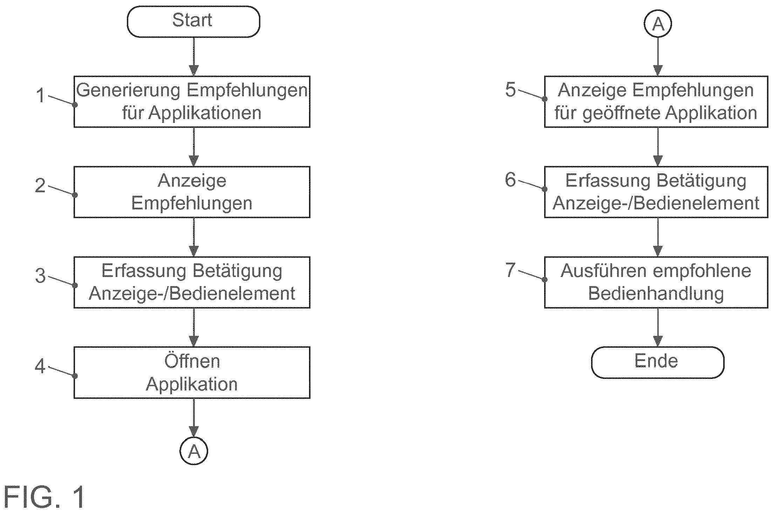

Figur 1 zeigt ein Flussdiagramm für das erfindungsgemäße Verfahren. In einem ersten Schritt 1 werden Empfehlungen zur Bedienung verschiedener Funktionen, die durch Softwareapplikationen implementiert sind, generiert. Die jeweilige Empfehlung kann hierbei insbesondere basierend auf dem bisherigen Nutzerverhalten in Korrelation mit äußeren Parametern wie der aktuellen Zeit und dem aktuellen Ort des Nutzers ermittelt werden. Weiterhin wird ein Wahrscheinlichkeitswert für die situative Relevanz der empfohlenen Bedienhandlung ermittelt. Dieser Wahrscheinlichkeitswert gibt an, ob der Vorschlag für den Nutzer zu diesem Zeitpunkt passend ist bzw. ob basierend auf dem gelernten bisherigen Nutzerverhalten eine Bedienhandlung durch den Nutzer wahrscheinlich ist.

In dem darauf folgenden Schritt 2 werden Empfehlungen für verschiedenen Funktionen bzw. Softwareapplikationen auf einer globalen Anzeigeebene gleichzeitig angezeigt. Hierbei können Anzeige- und Bedienelemente angezeigt werden, die lediglich auf verschiedene zum gegenwärtigen Zeitpunkt empfohlene Applikationen verweisen. Es kann aber ebenso mittels der Anzeige- und Bedienelemente zusätzlich auch eine Empfehlung für eine konkrete Bedienhandlung der empfohlenen Applikation gegeben werden, die zum gegenwärtigen Zeitpunkt als am wahrscheinlichsten angesehen wird.

Wird eine der dargestellten Anzeige- und Bedienelemente durch den Nutzer betätigt, so wird dieses im darauffolgenden Schritt 3 erfasst. Daraufhin wird in Schritt 4 die dem Anzeige- und Bedienelement zugeordnete Softwareapplikation geöffnet. Für diese werden dann in Schritt 5 auf einer Applikationsebene dem Nutzer eine Vielzahl von Empfehlungen präsentiert, für die jeweils Anzeige- und Bedienelemente angezeigt werden. Eine Betätigung von einem der angezeigten Anzeige- und Bedienelemente wird in Schritt 6 erfasst und führt dann in Schritt 7 zum Ausführen der für die geöffnete Softwareapplikation empfohlenen Bedienhandlung. Falls die in Schritt 2 angezeigten Anzeige- und Bedienelemente bereits eine Empfehlung für eine konkrete Bedienhandlung der jeweiligen Applikationen geben, so können die Schritte 5 und 6 auch übersprungen werden und die empfohlene Bedienhandlung nach Öffnen der Applikation automatisch ausgeführt werden.

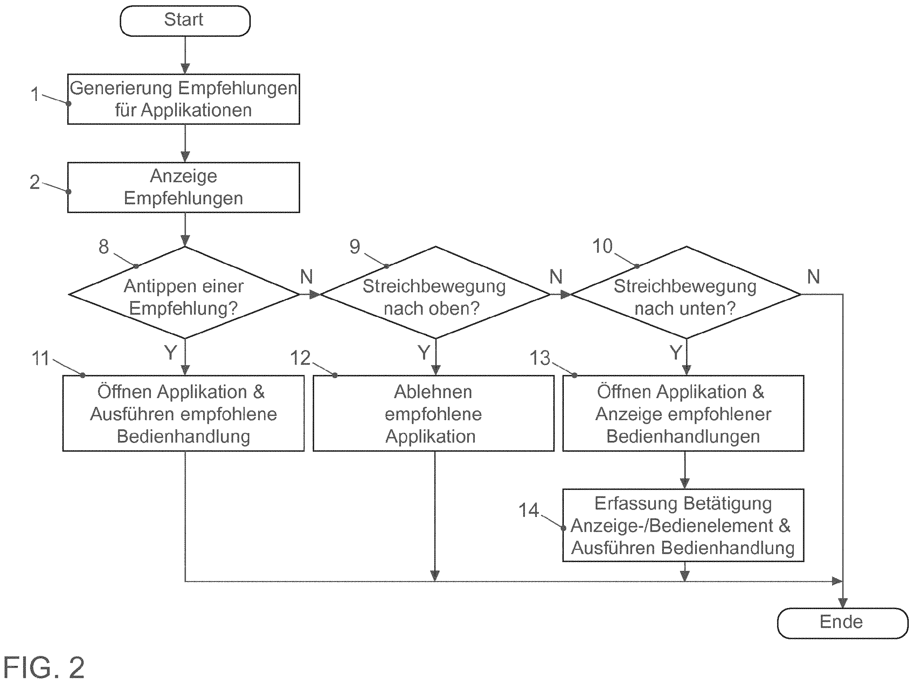

Figur 2 zeigt ein Flussdiagramm für eine mögliche Ausführungsform eines erfindungsgemäßen Vorschlagssystems in Verbindung mit einem berührungsempfindlichen Display. Die Verfahrensschritte 1 und 2 entsprechen hierbei denen aus Figur 1, wobei die auf der globalen Anzeigeebene gleichzeitig angezeigten Anzeige- und Bedienelemente sowohl Empfehlungen für Applikationen als auch Bedienhandlung für die empfohlenen Applikationen geben. Die dargestellten Anzeige- und Bedienelemente können in dieser Ausführungsform durch den Nutzer betätigt werden, indem dieser mit einem oder mehreren Fingern die Oberfläche des berührungsempfindlichen Displays berührt. Ebenso kann eine Betätigung der Anzeige- und Bedienelemente auch durch eine Gestenerkennung mittels geeigneter Sensoren im Bereich des Displays erfasst werden, sodass dann keine Berührung des Displays erforderlich ist.

Erfolgt eine Betätigung der dargestellten Anzeige- und Bedienelemente, so wird diese erfasst und die Art dieser Betätigung ausgewertet. Ergibt diese Auswertung in Schritt 8, dass der Nutzer das dargestellte Anzeige- und Bedienelement angetippt hat (auch als "Tap" bekannt), so wird hierdurch in Schritt 11 sowohl die Empfehlung für die Applikation als auch für die Bedienhandlung für diese Applikationen angenommen. Die empfohlene Applikation wird geöffnet und die empfohlene Bedienhandlung automatisch ausgeführt. Ergibt die Auswertung dagegen in Schritt 9, dass der Nutzer eine Streichbewegung nach oben ("Swipe up") auf dem Anzeige- und Bedienelement ausgeführt hat, so wird die empfohlene Applikation in Schritt 12 abgelehnt. Sollte die Auswertung in Schritt 10 ergeben, dass eine Streichbewegung nach unten ("Swipe down") ausgeführt wurde, so wird die empfohlene Applikation in Schritt 13 geöffnet und es werden für diese Applikation mehrere Empfehlungen verknüpft mit entsprechenden Anzeige- und Bedienelementen angezeigt. Wird eines dieser Anzeige- und Bedienelemente nun betätigt, beispielsweise wiederum durch ein Antippen, so wird dieses in Schritt 14 erfasst und die empfohlene Bedienhandlung für diese Applikation ausgeführt.

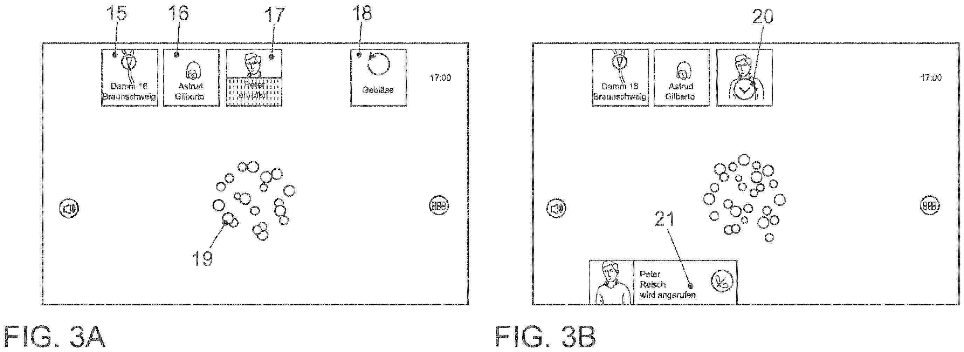

Figur 3 zeigt eine grafische Benutzerschnittstelle für das erfindungsgemäße Vorschlagssystem. Beispielhaft wird auf eine Verwendung für ein Infotainment-System eines Fahrzeugs Bezug genommen. Das Vorschlagssystem liefert hierbei Empfehlungen für Bedienhandlungen eines im Fahrzeug integrierten Infotainmentsystems, kann aber beispielsweise ebenso für ein Fahrerassistenzsystem des Fahrzeugs eingesetzt werden. Die Anzeige der grafischen Benutzerschnittstelle kann beispielsweise auf einem im Bereich der Mittelkonsole angeordnete Display, das als Touchscreen-Display ausgestattet ist, erfolgen.

In Figur 3A werden auf dem Display mehrere Empfehlungen auf globaler Anzeigeebene wiedergegeben. Hierfür werden jeweils Anzeige- und Bedienelemente dargestellt, die in Form eines Icons oder einer Kachel ausgestaltet sein können. Durch geeignete Bildsymbole, gegebenenfalls kombiniert mit einem Texthinweis, wird jeweils der thematische Zusammenhang zu der empfohlenen Applikation und der für die jeweilige Applikation vorgeschlagenen Bedienhandlung gegeben. Die Icons bzw. Kacheln können hierbei in einer Empfehlungsleiste nebeneinander angeordnet werden.

Die Empfehlungen können beispielsweise einen Zielort für die Navigation, einen Titel für die Musikwiedergabe oder einen Telefonkontakt betreffen und werden durch jeweilige Anzeige- und Bedienelemente 15,16, 17 dargestellt. Weiterhin kann auch ein Anzeige- und Bedienelement 18 vorgesehen sein, mittels dem eine automatisch ausgeführte Bedienhandlung, beispielsweise eine automatische Veränderung der Gebläsefunktion, rückgängig gemacht werden kann. Schließlich kann ein Bildsymbol 19 in Form einer Wolke aus Kugeln darauf hinweisen, dass das Vorschlagssystem aktiv ist und Empfehlungen gegeben werden und gegebenenfalls ausgeführt werden können. In dem dargestellten Beispiel empfiehlt das Vorschlagssystem den Kontakt "Peter" anzurufen, beispielsweise da der Nutzer dieses bisher immer an dem vorliegenden Wochentag zur gegenwärtigen Uhrzeit getan hat.

Figur 3B zeigt die grafische Benutzerschnittstelle, nachdem durch Antippen des Anzeige- und Bedienelementes für den empfohlenen Telefonkontakt diese Empfehlung angenommen wurde. Dieses wird durch ein Bildsymbol 20, beispielsweise einen Haken, auf dem entsprechenden Anzeige- und Bedienelement, symbolisiert. Zusätzlich oder stattdessen kann das Anzeige- und Bedienelement in der Darstellung oder Farbe verändert werden. Als Folge der Anwahl durch den Nutzer wird die Telefon-Applikation aktiv und öffnet sich in einem Teilfenster, beispielsweise einem sogenannten Widget, im unteren Bereich der Anzeige, wobei der empfohlene Anrufkontakt automatisch angewählt wird.

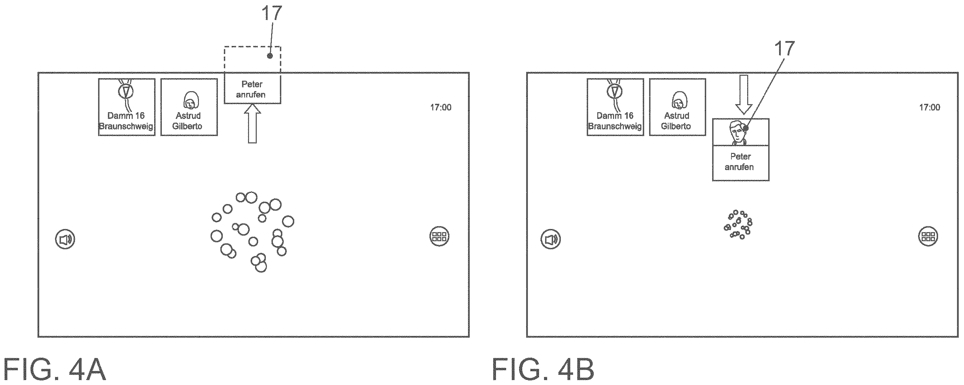

Wenn der Nutzer eine der auf der globalen Anzeigeebene dargestellten Empfehlungen ablehnen möchte, so kann er diese durch eine auf dem zugehörigen Anzeige- und Bedienelement 17 ausgeführten Streichbewegung nach oben ausblenden, wie in Figur 4A dargestellt. Auf diese Weise wird die Übersichtlichkeit der Anzeige erhöht, da nur für den Nutzer interessante Empfehlungen weiterhin dargestellt werden. Ebenso erlaubt dieses dem Vorschlagssystem anstelle der abgelehnten Empfehlung eine andere Empfehlung darzustellen ohne dass hierbei die Übersichtlichkeit durch eine Zunahme der Empfehlungen leiden würde.

Möchte der Nutzer zwar eine der empfohlenen Applikationen nutzen, nicht jedoch die für diese Applikation empfohlene Benutzungshandlung vornehmen, so kann er durch eine auf dem zugehörigen Anzeige- und Bedienelement 17 ausgeführten Streichbewegung nach unten die entsprechende Applikation öffnen, wie in Figur 4B dargestellt. Im obigen Beispiel bedeutet dieses, dass der Vorschlag, ein Telefonat zu führen vom Nutzer als passend empfunden wird, er allerdings nicht den Kontakt "Peter" sondern einen anderen Kontakt anrufen möchte.

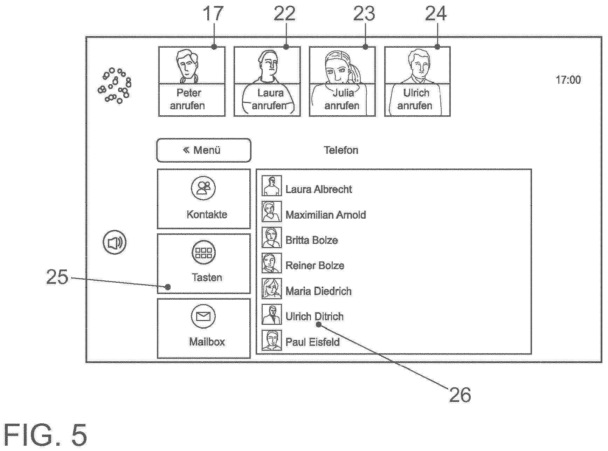

Für die geöffnete Telefon-Applikation zeigt das Vorschlagssystem nun auf der Applikationsanzeigeebene mehrere Vorschläge an, wie in Figur 5 dargestellt. Das Anzeige- und Bedienelement 17 für den Vorschlag, den Kontakt "Peter" anzurufen, wird weiterhin dargestellt. Obwohl dieser Empfehlung gegenwärtig nicht gefolgt wird, befindet sich diese weiterhin an erster Stelle der Empfehlungen. Zusätzlich sind Vorschläge für weitere Kontakte, die das Vorschlagssystem als weniger passend erachtet - aber trotzdem eine situative Relevanz für den Nutzer haben - ebenfalls aufgelistet und durch entsprechende Anzeige- und Bedienelemente 22, 23, 24 dargestellt und bedienbar. Die Reihenfolge der dargestellten Anzeige- und Bedienelemente wird hierbei durch die Wahrscheinlichkeit der situativen Relevanz bestimmt. Zusätzlich können Anzeige- und Bedienelemente 25 für weitere Funktionen der Telefon-Applikation sowie eine Liste 26 aller Telefonkontakte, beispielsweise alphabetisch sortiert, angezeigt werden.

Das im Fahrzeug integrierte Vorschlagssystem kann den Nutzer basierend auf verschiedenartigen Informationen bedarfsgerecht unterstützen. So können Interessen des Nutzers oder frühere Benutzungshandlung des Nutzers ebenso herangezogen werden wie das aktuelle Verhalten des Nutzers, dass durch eine Nutzerbeobachtung mittels geeigneter Sensoren im Fahrzeug erfasst werden kann. Ebenso kann vorgesehen sein, dass bei der Nutzung des Fahrzeugs durch mehrere Nutzer eine Unterscheidung der Nutzer erfolgt um das Nutzerverhalten der verschiedenen Nutzer separat zu erlernen und zukünftig zu berücksichtigen um an den jeweiligen Nutzer angepasste Empfehlungen bereitstellen zu können. Weiterhin kann die aktuelle Fahrsituation, beispielsweise basierend auf Fahrzeugparametern wie der aktuellen Geschwindigkeit, oder das aktuelle Umfeld des Fahrzeugs durch außen am Fahrzeug angebrachte Sensoren berücksichtigt werden.

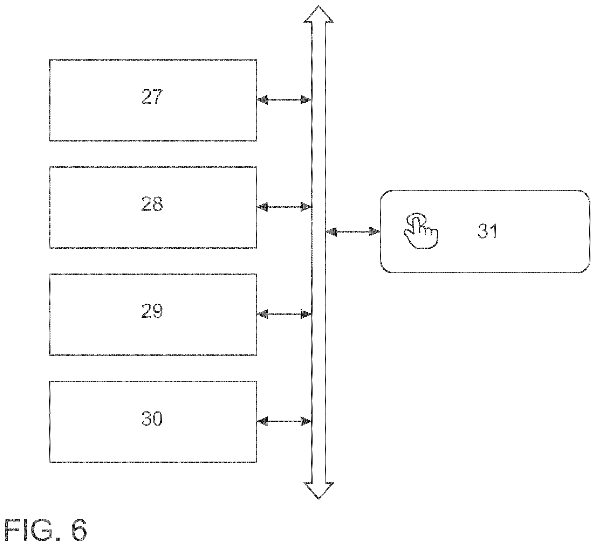

Figur 6 zeigt eine schematische Darstellung einer erfindungsgemäßen Vorrichtung. Eine Empfehlungseinheit 27 generiert Empfehlungen für zwei oder mehrere Softwareapplikationen und ermittelt hierbei auch Wahrscheinlichkeitswerte für die empfohlenen Bedienhandlungen. Der Empfehlungseinheit 27 können hierfür verschiedene Parameter, wie beispielsweise die aktuelle Zeit oder der aktuelle Ort des Fahrzeugs, die aktuelle Fahrsituation oder das aktuell erfasste Nutzerverhalten zugeführt werden. Ebenso kann die Empfehlungseinheit auf Informationen zum bereits erlernten Nutzerverhalten zugreifen, die beispielsweise in einer Datenbank in einem fahrzeuginternen oder fahrzeugexternen Speicher abgelegt sein können. Eine Bilderzeugungseinheit 28 steuert ein Touchscreen-Display 31 so an, dass Anzeige- und Bedienelemente für die Empfehlungen der Softwareapplikationen bzw. die empfohlenen Bedienhandlungen für die geöffnete Softwareapplikation angezeigt werden. Die Berührung der Oberfläche des Touchscreen-Displays 31 im Bereich eines dargestellten Anzeige- und Bedienelements wird durch eine Erfassungseinheit 30 erkannt, die eine Information hierüber der Computereinheit 29 zuführt, welche die entsprechende Softwareapplikation gegebenenfalls öffnet und ausführt und die Bilderzeugungseinheit 28 ansteuert, um die Anzeige entsprechend anzupassen.

Die Erfindung kann vorteilhaft im Bereich der Fahrzeugtechnik eingesetzt werden, ist aber keineswegs darauf beschränkt. Vielmehr kann die Erfindung in beliebigen computerbasierten Systemen verwendet werden, bei denen eine Interaktion mit einem Vorschlagssystem für Bedienhandlungen in Kombination mit einer grafischen Benutzerschnittstelle erfolgt.
- 1: Verfahrensschritt mit Generierung von Empfehlungen für mehrere Softwareapplikation
- 2: Verfahrensschritt mit Anzeige der generierten Empfehlungen
- 3: Verfahrensschritt mit Erfassung der Betätigung eines Anzeige- und Bedienelements einer empfohlenen Software-Applikation
- 4: Verfahrensschritt mit Öffnen einer Software-Applikation
- 5: Verfahrensschritt mit Anzeige von Empfehlungen für die geöffnete Software-Applikation
- 6: Verfahrensschritt mit Erfassung der Betätigung eines Anzeige- und Bedienelements einer empfohlenen Bedienhandlung
- 7: Verfahrensschritt mit Ausführen einer empfohlenen Bedienhandlung
- 8: Verfahrensschritt mit Ermittlung des Antippen einer Empfehlung
- 9: Verfahrensschritt mit Ermittlung einer Streichbewegung nach oben
- 10: Verfahrensschritt mit Ermittlung einer Streichbewegung nach unten
- 11: Verfahrensschritt mit Öffnen einer Software-Applikation und Ausführung der empfohlenen Bedienhandlung
- 12: Verfahrensschritt mit Ablehnen einer empfohlenen Software-Applikation
- 13: Verfahrensschritt mit Öffnen einer Software-Applikation und Anzeige empfohlener Bedienhandlungen
- 14: Verfahrensschritt mit Erfassung der Betätigung eines einer empfohlenen Bedienhandlung zugeordneten Anzeige- und Bedienelements und Ausführen der ausgewählten Bedienhandlung
- 15, 16,17, 22, 23, 24: Anzeige- und Bedienelemente für Empfehlungen
- 18: Anzeige- und Bedienelement zum Rückgängigmachen einer automatisch ausgeführten Bedienhandlung
- 19: Symbol für aktives Vorschlagssystem
- 20: Symbol für ausgewählte Empfehlung
- 21: Widget für Telefon-Applikation
- 25: Anzeige- und Bedienelemente für Telefon-Applikation
- 26: Liste der Telefonkontakte
- 27: Empfehlungseinheit
- 28: Bilderzeugungseinheit
- 29: Computereinheit
- 30: Erfassungseinheit
- 31: Touchscreen-Display

## Patentansprüche

1. Verfahren zur Darstellung von empfohlenen Bedienhandlungen eines Vorschlagssystems und Interaktion mit dem Vorschlagssystem, wobei das Verfahren die folgenden Schritte umfasst:
- Generieren (1) von Empfehlungen für zwei oder mehrere Softwareapplikationen;
- Gemeinsames Anzeigen (2) jeweils eines Anzeige- und Bedienelements (15, 16,17) für die Empfehlungen der zwei oder mehreren Softwareapplikationen auf einer globalen Anzeigenebene;
- Erfassen (3) einer Betätigung eines der gemeinsam angezeigten Anzeige- und Bedienelemente;
- Öffnen (4) der Softwareapplikation, welche dem betätigten Anzeige- und Bedienelement zugeordnet ist,
wobei mindestens eines der Anzeige- und Bedienelemente (15, 16,17) auf der globalen Anzeigenebene neben einer Empfehlung zum Öffnen der Softwareapplikation auch eine empfohlene Bedienhandlung für diese Softwareapplikation darstellt und bei Erfassen der Betätigung des mindestens einen Anzeige- und Bedienelementes
- bei einer ersten Bedienhandlung (8) die empfohlene Softwareapplikation geöffnet und die empfohlene Bedienhandlung für diese Softwareapplikation automatisch ausgeführt wird (11);
- bei einer von der ersten Bedienhandlung verschiedenen zweiten Bedienhandlung (9) die empfohlene Softwareapplikation abgelehnt wird (12) und anstelle der abgelehnten Empfehlung eine andere Empfehlung dargestellt wird;
- bei einer von den ersten beiden Bedienhandlungen verschiedenen dritten Bedienhandlung (10) die empfohlene Softwareapplikation geöffnet und für diese Softwareapplikation mehrere Anzeige- und Bedienelemente (17, 22, 23, 24), welche jeweils eine von mehreren empfohlenen Bedienhandlungen für die geöffnete Softwareapplikation repräsentieren, auf einer der globalen Anzeigeebene untergeordneten Applikationsanzeigeebene gemeinsam angezeigt werden (13).

2. Verfahren nach Anspruch 1, wobei Empfehlungen für Bedienhandlungen der zwei oder mehreren Softwareapplikationen generiert werden, Wahrscheinlichkeitswerte für die Ausführung der empfohlenen Bedienhandlungen ermittelt werden und jeweils ein Anzeige- und Bedienelement (15, 16,17), welches die empfohlene Bedienhandlung mit dem gegenwärtig höchsten Wahrscheinlichkeitswert für die jeweilige Softwareapplikation repräsentiert, für die zwei oder mehreren Softwareapplikationen auf der globalen Anzeigeebene angezeigt wird.

3. Verfahren nach Anspruch 2, wobei die für die geöffnete Softwareapplikation angezeigten Anzeige- und Bedienelemente (17, 22, 23, 24) geordnet nach den Wahrscheinlichkeitswerten für die Ausführung der empfohlenen Bedienhandlungen auf der Applikationsanzeigeebene angezeigt werden.

4. Verfahren nach Anspruch 2 oder 3, wobei der Wahrscheinlichkeitswert für die Ausführung der empfohlenen Bedienhandlung aus dem bisherigen Nutzerverhalten und/oder äußeren Parametern ermittelt wird.

5. Verfahren nach Anspruch 4, wobei die äußeren Parameter zur Ermittlung des Wahrscheinlichkeitswerts die aktuelle Zeit und/oder die aktuelle Position des Nutzers umfassen.

6. Verfahren nach einem der vorhergehenden Ansprüche, wobei die Anzeige- und Bedienelemente auf einem berührungsempfindlichen Display dargestellt werden und die erste Bedienhandlung einem Antippen (8) eines dargestellten Anzeige- und Bedienelements, die zweite Bedienhandlung einer Streichbewegung nach oben (9) und die dritte Bedienhandlung einer Streichbewegung nach unten (10) auf einem dargestellten Anzeige- und Bedienelement entspricht.

7. Vorrichtung zur Darstellung von empfohlenen Bedienhandlungen eines Vorschlagssystems und Interaktion mit dem Vorschlagssystem, mit
- einer Empfehlungseinheit (27), die dazu eingerichtet ist, Empfehlungen für zwei oder mehrere Softwareapplikationen zu generieren;
- einem Display (31);
- einer Bilderzeugungseinheit (28), die dazu eingerichtet ist, das Display (31) so anzusteuern, dass jeweils ein Anzeige- und Bedienelement für die Empfehlungen der zwei oder mehreren Softwareapplikationen auf einer globalen Anzeigenebene gemeinsam anzeigt wird;
- einer Erfassungseinheit (30), die dazu eingerichtet ist, eine Betätigung eines der angezeigten Anzeige- und Bedienelemente (15, 16, 17, 22, 23, 24) zu erfassen;
- einer der Computereinheit (29), die dazu eingerichtet ist, dass auf ihr die Softwareapplikation, welche dem betätigten Anzeige- und Bedienelement zugeordnet ist, geöffnet wird;
wobei die Vorrichtung dazu eingerichtet ist, ein Verfahren gemäß einem der Ansprüche 1 bis 6 auszuführen.

8. Vorrichtung nach Anspruch 7, wobei diese in einem Fahrzeug vorgesehen ist und das Vorschlagssystem dazu eingerichtet ist, Bedienhandlungen für ein Infotainmentsystem des Fahrzeugs zu empfehlen.

9. Kraftfahrzeug **dadurch gekennzeichnet, dass** es eine Vorrichtung gemäß Ansprüchen 7 oder 8 aufweist.

## Claims

1. Method for displaying recommended control actions of a suggestion system and interacting with the suggestion system, wherein the method comprises the following steps:
- generating (1) recommendations for two or more software applications;
- jointly displaying (2) one display and control element (15, 16, 17) for each of the recommendations of the two or more software applications on a global display level;
- detecting (3) an activation of one of the jointly displayed display and control elements;
- opening (4) the software application that is assigned to the activated display and control element;
wherein at least one of the display and control elements (15, 16, 17) on the global display level displays not only a recommendation to open the software application but also a recommended control action for this software application, and upon detection of the activation of the at least one display and control element
- a first control action (8) results in the recommended software application being opened and the recommended control action for this software application being executed automatically (11);
- a second control action (9), which is different from the first control action, results in the recommended software application being rejected (12) and another recommendation being displayed instead of the rejected recommendation;
- a third control action (10), which is different from the first two control actions, results in the recommended software application being opened and multiple display and control elements (17, 22, 23, 24), which each represent one of multiple recommended control actions for the opened software application, being jointly displayed (13) for this software application on an application display level, which is subordinate to the global display level.

2. Method according to Claim 1, wherein recommendations for control actions of the two or more software applications are generated, probability values for the execution of the recommended control actions are determined and a display and control element (15, 16, 17) that represents the recommended control action with the highest probability value for the respective software application at present is displayed on the global display level for each of the two or more software applications.

3. Method according to Claim 2, wherein the display and control elements (17, 22, 23, 24) displayed for the opened software application are displayed on the application display level in a manner ordered according to the probability values for the execution of the recommended control actions.

4. Method according to Claim 2 or 3, wherein the probability value for the execution of the recommended control action is determined from the previous user behaviour and/or external parameters.

5. Method according to Claim 4, wherein the external parameters for determining the probability value comprise the present time and/or the present position of the user.

6. Method according to one of the preceding claims, wherein the display and control elements are displayed on a touch-sensitive display and the first control action corresponds to tapping (8) on a displayed display and control element, the second control action to an upward swipe movement (9) and the third control action to a downward swipe movement (10) on a displayed display and control element.

7. Device for displaying recommended control actions of a suggestion system and interacting with the suggestion system, having
- a recommendation unit (27) configured to generate recommendations for two or more software applications;
- a display (31);
- an image generation unit (28) configured to control the display (31) such that one display and control element for each of the recommendations of the two or more software applications is jointly displayed on a global display level;
- a detection unit (30) configured to detect an activation of one of the displayed display and control elements (15, 16, 17, 22, 23, 24);
- a computer unit (29) configured so that the software application that is assigned to the activated display and control element is opened on it;
wherein the device is configured to perform a method according to one of Claims 1 to 6.

8. Device according to Claim 7, wherein said device is provided in a vehicle and the suggestion system is configured to recommend control actions for an infotainment system of the vehicle.

9. Motor vehicle, **characterized in that** it has a device according to Claim 7 or 8.

## Revendications

1. Procédé permettant de représenter des manipulations de commande recommandées d'un système de suggestion et d'interagir avec le système de suggestion, le procédé comprenant les étapes suivantes consistant à :
- générer (1) des recommandations pour deux ou plusieurs applications logicielles ;
- afficher ensemble (2) respectivement un élément d'affichage et de commande (15, 16, 17) pour les recommandations des deux ou plusieurs applications logicielles sur un plan d'affichage global ;
- détecter (3) un actionnement d'un des éléments d'affichage et de commande affichés ensemble ;
- ouvrir (4) l'application logicielle qui est associée à élément d'affichage et de commande,
dans lequel au moins l'un des éléments d'affichage et de commande (15, 16, 17) sur le plan d'affichage global à côté d'une recommandation d'ouvrir l'application logicielle représente aussi une manipulation de commande recommandée pour cette application logicielle, et lorsque l'actionnement dudit au moins un élément d'affichage et de commande est détecté,
- dans le cas d'une première manipulation de commande (8), l'application logicielle recommandée est ouverte, et la manipulation de commande recommandée pour cette application logicielle est effectuée (11) automatiquement ;
- dans le cas d'une deuxième manipulation de commande (9), différente de la première manipulation de commande, l'application logicielle recommandée est rejetée (12), et au lieu de la recommandation rejetée, une autre recommandation est représentée ;
- dans le cas d'une troisième manipulation de commande (10), différente des deux premières manipulations de commande, l'application logicielle recommandée est ouverte, et pour cette application logicielle, plusieurs éléments d'affichage et de commande (17, 22, 23, 24), qui représentent respectivement une parmi plusieurs manipulations de commande recommandées pour l'application logicielle ouverte, sont affichés ensemble (13) sur un plan d'affichage d'application subordonné au plan d'affichage global.

2. Procédé selon la revendication 1, dans lequel des recommandations pour des manipulations de commande des deux ou plusieurs applications logicielles sont générées, des valeurs de probabilités pour l'exécution des manipulations de commande recommandées sont déterminées, et respectivement un élément d'affichage et de commande (15, 16, 17), qui représente la manipulation de commande recommandée ayant la valeur de probabilité actuellement la plus élevée pour l'application logicielle respective, est affiché pour les deux ou plusieurs applications logicielles sur le plan d'affichage global.

3. Procédé selon la revendication 2, dans lequel les éléments d'affichage et de commande (17, 22, 23, 24) affichés pour l'application logicielle ouverte sont affichés sur le plan d'affichage d'application dans l'ordre des valeurs de probabilité pour l'exécution des manipulations de commande recommandées.

4. Procédé selon la revendication 2 ou 3, dans lequel la valeur de probabilité pour l'exécution de la manipulation de commande recommandée est déterminée d'après le comportement précédent de l'utilisateur et/ou des paramètres externes.

5. Procédé selon la revendication 4, dans lequel les paramètres externes pour déterminer la valeur de probabilité comprennent l'heure actuelle et/ou la position actuelle de l'utilisateur.

6. Procédé selon l'une quelconque des revendications précédentes, dans lequel les éléments d'affichage et de commande sont représentés sur un écran tactile, et la première manipulation de commande est un effleurement (8) d'un élément d'affichage et de commande représenté, la deuxième manipulation de commande est un mouvement de balayage vers le haut (9), et la troisième manipulation de commande est un mouvement de balayage vers le bas (10) sur un élément d'affichage et de commande représenté.

7. Dispositif permettant de représenter des manipulations de commande recommandées d'un système de suggestion et d'interagir avec le système de suggestion, comprenant
- une unité de recommandation (27) qui est aménagée pour générer des recommandations pour deux ou plusieurs applications logicielles ;
- un écran (31) ;
- une unité de formation d'image (28) qui est aménagée pour piloter l'écran (31) de telle sorte que respectivement un élément d'affichage et de commande pour les recommandations des deux ou plusieurs applications logicielles est affiché ensemble sur un plan d'affichage global ;
- une unité de détection (30) qui est aménagée pour détecter un actionnement d'un des éléments d'affichage et de commande (15, 16, 17, 22, 23, 24) ;
- une unité informatique (29) qui est aménagée pour que l'application logicielle, qui est associée à l'élément d'affichage et de commande actionné, s'ouvre sur celle-ci ;
le dispositif étant aménagé pour exécuter un procédé selon l'une quelconque des revendications 1 à 6.

8. Dispositif selon la revendication 7, dans lequel celui-ci est prévu dans un véhicule, et le système de suggestion est aménagé pour recommander des manipulations de commande pour un système d'infodivertissement du véhicule.

9. Véhicule automobile, **caractérisé en ce qu'**il présente un dispositif selon la revendication 7 ou 8.
